# EUROPEAN PATENT APPLICATION

(11) **EP 4 700 159 A1**
(43) Date of publication of application: **25.02.2026**
(21) Application number: 25190399.3
(22) Date of filing: 18.07.2025
(51) Int. Cl.: C25B 11/054, C25B 11/089, C25B 11/093

(54) **SYSTEMS AND METHODS FOR WATER ELECTROLYSIS WITH ELECTRODES HAVING NICKEL-COBALT-PHOSPHOROUS-BASED COMPOUNDS**

(30) Priority: 12.08.2024 US 202418800246
(71) Applicant: Honeywell International Inc., Charlotte, NC 28202 (US)
(72) Inventor: CAO, Gangmin, Charlotte, 28202 (US); LV, Jingkang, Charlotte, 28202 (US); QIU, Jin, Charlotte, 28202 (US)
(74) Representative: Ingrassia, Fisher & Lorenz UK Ltd.

(57) **Abstract**

Systems and methods are provided for water electrolysis. The system includes an electrolyte material configured for the exchange of anions, a first electrode including a nickel-cobalt-phosphorus-based compound, and a second electrode, wherein the first electrode and the second electrode are configured to exchange the anions through the electrolyte material.

## Description

### TECHNICAL FIELD

The present invention generally relates to systems and methods for water electrolysis, and more particularly relates to systems and methods that include electrodes having nickel-cobalt-phosphorous-based compounds.

### BACKGROUND

Interest in alternative energy sources continues to grow, particularly for applications that utilize hydrogen. As such, there is an ongoing demand for efficient methods of hydrogen production. One possible approach to sustainable hydrogen production is water electrolysis. Water electrolysis, also known as "water splitting," is the decomposition of liquid water (H₂O) into oxygen gas (O₂) and hydrogen gas (H₂). This process includes passing an electric current through water with a voltage applied across an anode and a cathode. Hydrogen gas is produced at the cathode and oxygen gas is produced at the anode. Specifically, water electrolysis includes two half reactions including hydrogen evolution reaction (HER) at the cathode and oxygen evolution reaction (OER) at the anode. To improve current densities, and therefore increase the gases produced, water electrolysis typically includes a liquid electrolyte in the water or an ion exchange membrane (polymer electrolyte) between the anode and the cathode.

The efficiency of water electrolysis generally depends on the electrochemical catalyst performance of the electrode materials. For alkaline water electrolysis systems, the anode material is typically formed of nickel (Ni) or a nickel foam material. Although other materials have been found that are capable of initially providing improved catalyst performance relative to nickel, these materials typically dissolve in the highly corrosive anodic alkaline environment and lose their catalytical capability after relatively short periods of time.

Hence, there is an ongoing desire for systems and methods for water hydrolysis with improved gas generation, and including an ongoing desire for improved electrode materials. Furthermore, other desirable features and characteristics of the present invention will become apparent from the subsequent detailed description and the appended claims, taken in conjunction with the accompanying drawings and the foregoing technical field and background.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

A system is provided for water electrolysis. In one example, the system includes an electrolyte material configured for the exchange of anions, a first electrode including a nickel-cobalt-phosphorus-based compound, and a second electrode, wherein the first electrode and the second electrode are configured to exchange the anions through the electrolyte material.

In various examples, the electrolyte material of the system may be an anion exchange membrane, the first electrode is a first catalyst layer on a first side of the anion exchange membrane, and the second electrode is a second catalyst layer on a second side of the anion exchange membrane opposite the first side.

In various examples, the electrolyte material of the system may be an alkaline solution, and the first electrode and the second electrode are both in contact with the alkaline solution.

In various examples, the first electrode of the system may be an anode and the second electrode is a cathode.

In various examples, the first electrode of the system may be a cathode and the second electrode is an anode.

In various examples, the second electrode of the system may include a nickel-cobalt-phosphorus-based compound.

In various examples, the first electrode of the system may include about 5-95 wt.% Co, about 5-95 wt.% Ni, and about 5-20 wt.% P.

In various examples, the first electrode of the system may include about 0.01-5.0 wt.% of graphene or oxidized graphene.

In various examples, the first electrode of the system may include about 0.01-10.0 wt.% of one or more of nickel phosphide (NiP), nickel chloride (NiCl₂), cobalt phosphide (CoP), cobalt chloride (NiCl₂), cobalt-nickel phosphide (Co-Ni-P), nickel-cobalt-phosphide (Ni-Co-P), iridium oxide (IrOx), ruthenium oxide (RuOx), palladium (Pd), and platinum (Pt).

In various examples, the first electrode of the system may be formed at least in part by an electrodeposition process.

A method is provided for producing an electrode for water electrolysis. In one example, the method includes providing an electrodeposition bath of a solution that includes a nickel-cobalt-phosphorous-based compound, and electrodepositing the solution from the electrodeposition bath onto a substrate to form a coating layer that includes the nickel-cobalt-phosphorous-based compound and thereby form the electrode.

In various examples, the method may include forming the solution by combining nickel sulfate, nickel chloride, cobalt sulfate, cobalt chloride, phosphorous acid, hypophosphite salt, and boric acid. In various examples, the method may include forming the solution by combining graphene and/or oxidized graphene.

In various examples, the method may include providing an anion exchange membrane as the substrate, wherein electrodepositing the solution from the electrodeposition bath onto the substrate includes forming a first catalyst layer on a first side of the anion exchange membrane.

In various examples, the method may include forming a second catalyst layer on a second side of the anion exchange membrane, wherein the second catalyst layer includes a nickel-cobalt-phosphorus-based compound.

In various examples, the coating layer formed by the method may include about 5-95 wt.% Co, about 5-95 wt.% Ni, and about 5-20 wt.% P.

In various examples, the method may include providing graphene in the solution prior to electrodepositing the solution from the electrodeposition bath onto the substrate, wherein the coating layer includes about 0.01-5.0 wt.% of the graphene or oxidized graphene.

In various examples, the method may include providing one or more compounds that include one or more of nickel phosphide (NiP), cobalt phosphide (CoP), cobalt-nickel phosphide (Co-Ni-P), nickel-cobalt-phosphide (Ni-Co-P), iridium oxide (IrOx), ruthenium oxide (RuOx), palladium (Pd), and platinum (Pt), wherein the coating layer includes about 0.01-2.0 wt.% of the one or more compounds.

A precursor solution is provided for forming an electrode. In one example, the precursor solution includes a nickel-cobalt-phosphorus-based compound including about 5-95 wt.% Co, about 5-95 wt.% Ni, and about 5-20 wt.% P.

In various examples, the nickel-cobalt-phosphorus-based compound of the precursor solution may include about 0.01-2.0 wt.% of graphene.

In various examples, the nickel-cobalt-phosphorus-based compound of the precursor solution may include about 0.01-10.0 wt.% of one or more of nickel phosphide (NiP), nickel chloride (NiCl₂), cobalt phosphide (CoP), cobalt chloride (CoCl₂), cobalt-nickel phosphide (Co-Ni-P), nickel-cobalt-phosphide (Ni-Co-P), iridium oxide (IrOx), ruthenium oxide (RuOx), palladium (Pd), and platinum (Pt).

Furthermore, other desirable features and characteristics of the systems, methods, and precursor solutions will become apparent from the subsequent detailed description and the appended claims, taken in conjunction with the accompanying drawings and the preceding background.

### BRIEF DESCRIPTION OF THE DRAWINGS

The present invention will hereinafter be described in conjunction with the following drawing figures, wherein like numerals denote like elements, and wherein:
FIG. 1 is a diagram that schematically represents a system comprising an anion exchange membrane (AEM) in accordance with various embodiments;
FIG. 2 is a diagram that schematically represents a system comprising an anode and a cathode separated by a liquid alkaline electrolyzer in accordance with various embodiments;
FIG. 3 is a flow chart representing a method of forming an electrode in accordance with various embodiments; and
FIG. 4 is a flow chart representing a method of generating hydrogen via water electrolysis in accordance with various embodiments.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

Systems and methods disclosed herein provide for production of hydrogen from water via water hydrolysis (i.e., water splitting). Electrolysis of water is the decomposition of water (H₂O) into oxygen (O₂) and hydrogen (H₂) due to an electric current being passed through the water. The systems generally include an anode (or an anode catalyst layer), a cathode (or a cathode catalyst layer), and an electrolyte material separating the anode and the cathode. Notably, the systems disclosed herein include at least one electrode having a compound comprising a cobalt-nickel-phosphorus-based compound (Co-Ni-P). The systems may have various structures that utilizes various electrolysis techniques.

In various embodiments, the system may include an anode and a cathode separated by an anion exchange membrane. An anion exchange membrane (AEM) is a semipermeable membrane configured to conduct anions (e.g., hydroxide ions (OH⁻)) and water from the cathode to the anode while simultaneously functioning as a reactant barrier (e.g., impedes transport of gases such as oxygen (O₂) or hydrogen (H₂)). The anode and the cathode may be defined by an anode catalyst layer deposited on a first side of the ion exchange membrane (referred to as the anode-side) and a cathode catalyst layer deposited on a second side of the ion exchange membrane (referred to as the cathode-side) opposite the anode-side. The system may further include porous transport layers (PTLs) adjacent the anode and cathode catalyst layers configured to facilitate gas diffusion. The ion exchange membrane, anode catalyst layer, cathode catalyst layer, and PTLs in combination define an electrochemical cell. Bipolar plates may be provided to enclose the electrochemical cell and may include ports for transport of liquids and gases therethrough (e.g., water, hydrogen, oxygen). In various embodiments, the system may include more than one electrochemical cells arranged in a stack. In such embodiments, individual bipolar plates may function as both anode-side plates and cathode-side plates for adjacent electrochemical cells, that is, one or more of the bipolar plates may include flow paths, ports, channels, or the like provided on both sides thereof.

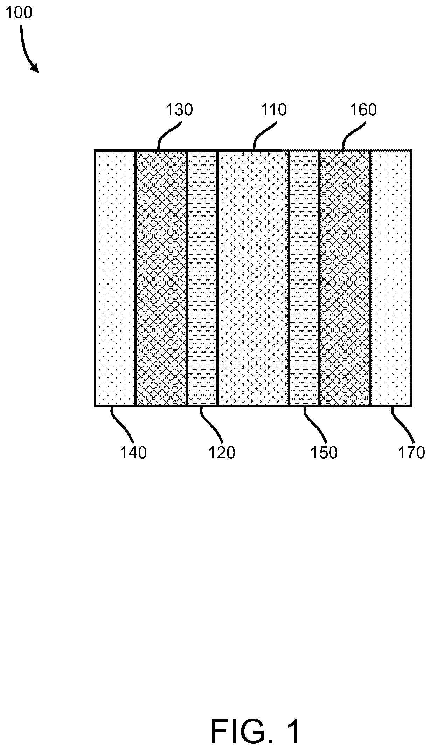

FIG. 1 presents an exemplary first system 100 configured for electrolysis that includes an AEM 110, an anode catalyst layer 120, an anode-side porous transport layer (PTL) 130, an anode-side bipolar plate 140, a cathode catalyst layer 150, a cathode-side PTL 160, and a cathode-side bipolar plate 170.

The AEM 110 may be formed of various materials including certain ionomers, typically comprising polymer or composite materials. In some embodiments, the AEM 110 includes a polymer material (backbone) having cationic ion-exchange groups tethered thereto (e.g., cations covalently bonded thereto). Exemplary but nonlimiting materials include poly(fluorenyl-co-aryl piperidinium) (PFAP)-based and polybenzimidazole-based materials (e.g., doped with alkaline salts).

In some examples, the anode catalyst layer 120 of FIG. 1 may include a cobalt-nickel-phosphorus-based compound (Co-Ni-P). In some examples, the anode catalyst layer 120 ay include a cobalt-nickel-phosphorus-based compound having about 5-95 wt.% Co, about 5-95 wt.% Ni, and about 5-20 wt.% P. In other examples, the anode catalyst layer 120 may include various materials including, but not limited to, compounds comprising phosphorus and a transition metal (e.g., iron (Fe), cobalt (Co), nickel (Ni)). In various embodiments, the anode catalyst layer 120 includes a cobalt-phosphorus-based compound (Co-P), an iron-phosphorus-based compound (Fe-P),or a nickel-phosphorus-based compound (Ni-P).

The cathode catalyst layer 150 of FIG. 1 may include various materials including, but not limited to, compounds comprising noble metals (e.g., platinum (Pt), gold (Ag), palladium (Pd), iridium (Ir), rhodium (Rh), ruthenium (Ru)) and alloys thereof, compounds comprising rare earth oxides (e.g., neodymium(III) oxide), and compounds comprising phosphate and a transition metal (e.g., iron (Fe), cobalt (Co), nickel (Ni)). In some examples, the cathode catalyst layer 150 may include a cobalt-nickel-phosphorus-based compound having about 5-95 wt.% Co, about 5-95 wt.% Ni, and about 5-20 wt.% P. In some examples, the cathode catalyst layer 150 may include a cobalt-nickel-phosphorus-based compound (Co-Ni-P). In other examples, the cathode catalyst layer 150 may include various materials including, but not limited to, compounds comprising phosphorus and a transition metal (e.g., iron (Fe), cobalt (Co), nickel (Ni)). In various embodiments, the cathode catalyst layer 150 includes a cobalt-phosphorus-based compound (Co-P), an iron-phosphorus-based compound (Fe-P),or a nickel-phosphorus-based compound (Ni-P).

In various examples, the anode catalyst layer 120 and/or the cathode catalyst layer 150 may include about 0.01-5.0 wt.% of one or more of graphene or oxidized graphene, and/or about 0.01-10.0 wt.% of one or more of nickel phosphide (NiP), nickel chloride (NiCl₂), cobalt phosphide (CoP), cobalt chloride (CoCl₂), cobalt-nickel phosphide (Co-Ni-P), nickel-cobalt-phosphide (Ni-Co-P), iridium oxide (IrOx), ruthenium oxide (RuOx), palladium (Pd), and platinum (Pt).

The anode-side PTL 130 and the cathode-side PTL 160 may be formed of various materials that provide high electron conductivity, high gas diffusivity, optionally, high corrosion resistance. In various embodiments, the anode-side PTL 130 and the cathode-side PTL 160 may include a wire mesh or matrix formed of a metallic material having a coating thereon comprising a metal or alloy that is chemically similar to the corresponding anode catalyst layer 120 or cathode catalyst layer 150 (e.g., include the same transition metal(s)). In various embodiments, the anode-side PTL 130 and/or the cathode-side PTL 160 include a wire mesh formed of, for example, titanium, aluminum, nickel, copper, zinc, or stainless steel (e.g., SS 304, SS 316, SS 430, SS A-286, etc.) and having a coating thereon comprising a transition metal-based compound, such as a cobalt-based alloy, an iron-based alloy, or a nickel-based alloy. In various embodiments, the anode-side PTL 130 and/or the cathode-side PTL 160 may be electrically connected to the corresponding anode catalyst layer 120 or cathode catalyst layer 150, such that the anode-side PTL 130 and/or the cathode-side PTL 160 forms part of the corresponding electrode.

The anode-side bipolar plate 140 and the cathode-side bipolar plate 170 may be formed of various materials that are rigid and, optionally, have high corrosion resistance. In various embodiments, the anode-side bipolar plate 140 and the cathode-side bipolar plate 170 may include a metallic, ceramic, polymeric, or composite plate having a coating thereon comprising a metal or alloy that is chemically similar to the corresponding anode catalyst layer 120 or cathode catalyst layer 150 (e.g., include the same transition metal(s)). In various embodiments, the anode-side PTL 130 and/or the cathode-side PTL 160 include a metallic plate (e.g., titanium, aluminum, nickel, copper, zinc, or stainless steel (e.g., SS 304, SS 316, SS 430, SS A-286, etc.)) having a coating thereon comprising a transition metal-based compound such as a cobalt-based alloy, an iron-based alloy, or a nickel-based alloy.

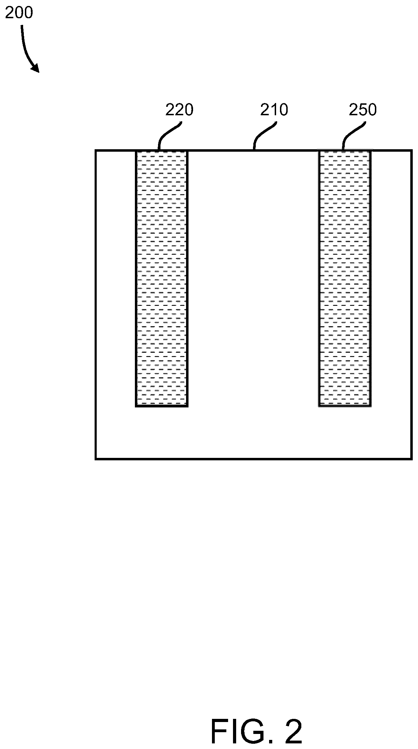

The systems and methods are not limited to embodiments that include an ion exchange membrane. For example, in various embodiments, the system may include an anode and a cathode separated by an alkaline electrolyzer configured to conduct anions (e.g., hydroxide ions (OH⁻)) from the cathode to the anode with hydrogen being generated on the cathode side. Exemplary but nonlimiting electrolyzers may include a liquid alkaline solution of sodium hydroxide or potassium hydroxide. FIG. 2 presents an exemplary second system 200 configured for electrolysis that includes a solution of an electrolyzer 210, an anode 220, and a cathode 250. The anode 220 and/or the cathode 250 may include materials such as those noted above for the anode catalyst layer 120 and the cathode catalyst layer 150.

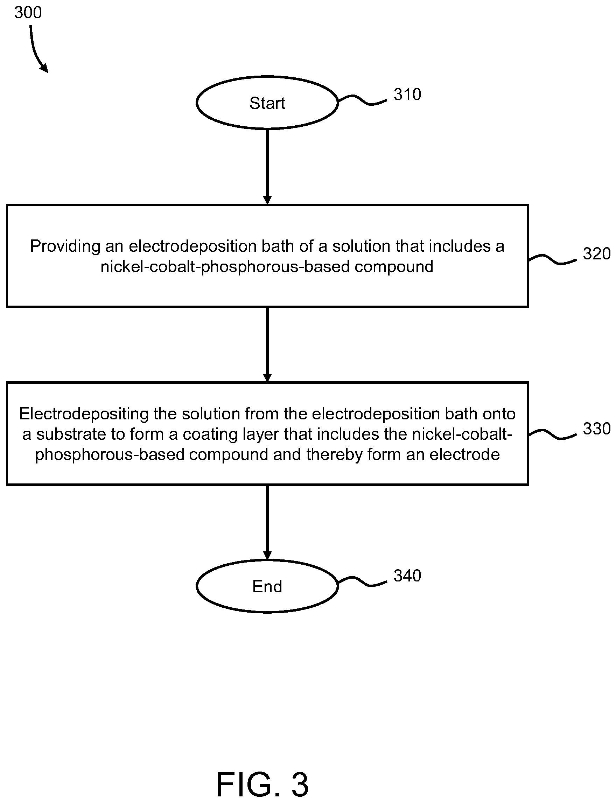

The first and second systems 100, 200 may be produced using various techniques and technologies. For example, FIG. 3 is a flowchart illustrating a nonlimiting method 300 for generating producing an electrode. The method 300 may start at 310. At 320, the method 300 may include providing an electrodeposition bath of a precursor solution that includes a nickel-cobalt-phosphorous-based compound. At 330, the method 300 may include electrodepositing the precursor solution from the electrodeposition bath onto a substrate to form a coating layer that includes the nickel-cobalt-phosphorous-based compound and thereby form an electrode. The method may end at 340. Various detailed examples for producing components of the system 100 are described below.

In various embodiments, the anode catalyst layer 120 may be formed by providing the ion exchange membrane (e.g., the AEM 110) and electroplating a metallic coating thereon. As a specific but nonlimiting example, the anode catalyst layer 120 may be formed by providing the AEM 110, locating at least a portion of the AEM 110 in a cobalt nickel phosphate precursor solution, and depositing a coating comprising, for example, a cobalt-nickel-phosphate-based alloy on the AEM 110 via an electroplating process. In various embodiments, the anode 220 may be formed by providing a core material (e.g., titanium, stainless steel, etc.), locating at least a portion of the core material in a cobalt nickel phosphate precursor solution, and depositing a coating comprising, for example, a cobalt-nickel-phosphate-based alloy on the core material via an electroplating process.

In various examples, the precursor solution may include a nickel-cobalt-phosphorus-based compound comprising, for example, about 5 to 95 wt.% Co, about 5 to 95 wt.% Ni, and about 5 to 20 wt.% P. In various examples, the precursor solution may include about 0.01 to 5.0 wt.% of graphene. In various examples, the precursor solution may include about 0.01 to 10.0 wt.% of one or more of nickel phosphide (NiP), nickel chloride (NiCl₂), cobalt phosphide (CoP), cobalt chloride (CoCl₂), cobalt-nickel phosphide (Co-NiP), nickel-cobalt-phosphide (Ni-Co-P), phosphorous acid, hypophosphite salt, boric acid, iridium oxide (IrOx), ruthenium oxide (RuOx), palladium (Pd), and platinum (Pt).

In various embodiments, one or more intermediate layers may be provided between the anode catalyst layer 120 and the ion exchange membrane (e.g., the AEM 110). For example, in certain embodiments, a cobalt-based alloy may be deposited onto the AEM 110 via electroplating, and then the anode catalyst layer 120 may be formed thereon by electroplating thereon a coating comprising, for example, a cobalt-nickel-phosphate-based alloy.

In various embodiments, the cathode catalyst layer 150 may be formed by providing the ion exchange membrane (e.g., the AEM 110) and electroplating a metallic coating thereon. As a specific but nonlimiting example, the cathode catalyst layer 150 may be formed by providing the AEM 110 and producing a coating thereon comprising, for example, a cobalt-based alloy via electroplating.

In various embodiments, the anode-side PTL 130 and the cathode-side PTL 160 may be formed by providing a metallic wire mesh (e.g., titanium, stainless steel, etc.) and electroplating the metallic wire mesh with a metallic coating. As a specific but nonlimiting example, the anode-side PTL 130 and the cathode-side PTL 160 may be formed by providing a stainless steel wire mesh and producing a coating thereon comprising a cobalt-based alloy via electroplating.

In various embodiments, the anode-side bipolar plate 140 and the cathode-side bipolar plate 170 may be formed by providing a metallic plate (e.g., titanium, stainless steel, etc.) and electroplating the metallic plate with a metallic coating. As a specific but nonlimiting example, the anode-side bipolar plate 140 and the cathode-side bipolar plate 170 may be formed by providing a stainless steel plate and producing a coating thereon comprising a cobalt-based alloy via electroplating.

Exemplary materials for certain layers of the anode-side PTL 130, the anode-side bipolar plate 140, the cathode-side PTL 160, and the cathode-side bipolar plate 170, and exemplary methods for depositing certain layers of the anode catalyst layer 120, the anode 220, the cathode catalyst layer 150, the cathode 250, the anode-side PTL 130, the anode-side bipolar plate 140, the cathode-side PTL 160, and the cathode-side bipolar plate 170 are disclosed in U.S. Patent Application Publication No. 2019/0292674 A1 to Ilgar et al., incorporated herein in its entirety.

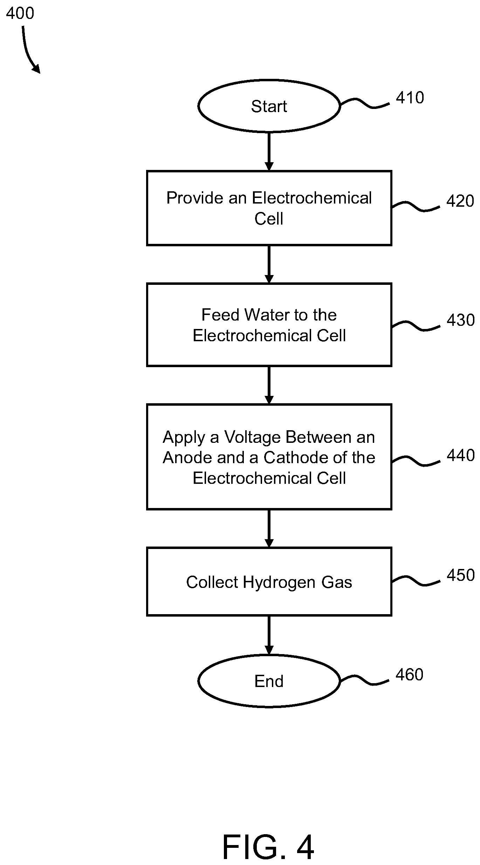

The systems disclosed herein, including the first and second systems 100, 200, provide for methods of generating hydrogen gas and oxygen gas from water via water electrolysis. For example, FIG. 4 is a flow chart illustrating a nonlimiting method 400 for generating hydrogen gas. The method 400 may begin at 410 and provide one or more electrochemical cells, such as those described herein for the first system 100, at 420. An electrolyte solution (e.g., water, KOH, etc.) may be fed to the electrochemical cell(s) at 430 and then a voltage may be applied at 440 between an anode (e.g., the anode catalyst layer 120) and a cathode (e.g., the cathode catalyst layer 150) of the electrochemical cell(s) (e.g., at a voltage of 1.23V or more). While the voltage is being applied at 440, water of the electrolyte solution is decomposed into oxygen (O₂) at the anode and hydrogen (H₂) at the cathode. The method 400 may include collecting, storing, and/or using the produced hydrogen gas and/or the produced oxygen gas at 450. The method 400 may end at 460.

The systems disclosed herein, including the first and second systems 100, 200, may be portions of a larger system configured for various purposes such as hydrogen gas generation, oxygen generation, and/or power generation. In various embodiments, the system is a portion of an industrial system configured for hydrogen production. In various embodiments, the system is a portion of a fuel cell configured for electricity generation.

The systems and methods disclosed herein provide various benefits over certain existing systems and methods. For example, embodiments that include the anode catalyst layer 120 with the cobalt-nickel-phosphate-based compound may provide high electrolysis efficiency with improved corrosion resistance relative to, for example, nickel-based or stainless steel-based anodes, and improved abundance and reduced cost relative to, for example, platinum and rare earth oxides.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A system for water electrolysis, the system comprising:
an electrolyte material configured for exchange of anions;
a first electrode comprising a nickel-cobalt-phosphorus-based compound; and
a second electrode, wherein the first electrode and the second electrode are configured to exchange the anions through the electrolyte material.

2. The system of claim 1, wherein the electrolyte material is an anion exchange membrane, the first electrode is a first catalyst layer on a first side of the anion exchange membrane, and the second electrode is a second catalyst layer on a second side of the anion exchange membrane opposite the first side.

3. The system of claim 1, wherein the electrolyte material is an alkaline solution, and the first electrode and the second electrode are both in contact with the alkaline solution.

4. The system of claim 1, wherein the first electrode is an anode and the second electrode is a cathode.

5. The system of claim 1, wherein the second electrode includes a nickel-cobalt-phosphorus-based compound.

6. The system of claim 1, wherein the first electrode includes:
about 5-95 wt.% Co;
about 5-95 wt.% Ni; and
about 5-20 wt.% P.

7. The system of claim 1, wherein the first electrode includes about 0.01-5.0 wt.% of graphene or oxidized graphene.

8. The system of claim 1, wherein the first electrode includes about 0.01-10.0 wt.% of one or more of nickel phosphide (NiP), nickel chloride (NiCl₂), cobalt phosphide (CoP), cobalt chloride (CoCl₂), cobalt-nickel phosphide (Co-Ni-P), nickel-cobalt-phosphide (Ni-Co-P), iridium oxide (IrOx), ruthenium oxide (RuOx), palladium (Pd), and platinum (Pt).

9. A method for producing an electrode for water electrolysis, the method comprising:
providing an electrodeposition bath of a solution that includes a nickel-cobalt-phosphorous-based compound; and
electrodepositing the solution from the electrodeposition bath onto a substrate to form a coating layer that includes the nickel-cobalt-phosphorous-based compound and thereby form the electrode.

10. The method of claim 9, further comprising forming the solution by adding one or more of nickel sulfate, nickel chloride, cobalt sulfate, cobalt chloride, phosphorous acid, hypophosphite salt, and boric acid to the solution.

11. The method of claim 9, further comprising providing an anion exchange membrane as the substrate, wherein electrodepositing the solution from the electrodeposition bath onto the substrate includes forming a first catalyst layer on a first side of the anion exchange membrane.

12. The method of claim 11, further comprising forming a second catalyst layer on a second side of the anion exchange membrane, wherein the second catalyst layer includes a nickel-cobalt-phosphorus-based compound.

13. The method of claim 9, wherein the coating layer includes:
about 5-95 wt.% Co;
about 5-95 wt.% Ni; and
about 5-20 wt.% P.

14. The method of claim 9, further comprising providing graphene in the solution prior to electrodepositing the solution from the electrodeposition bath onto the substrate, wherein the coating layer includes about 0.01-5.0 wt.% of the graphene or oxidized graphene.

15. The method of claim 9, further comprising providing one or more compounds that include one or more of nickel phosphide (NiP), nickel chloride (NiCl₂), cobalt phosphide (CoP), cobalt chloride (CoCl₂), cobalt-nickel phosphide (Co-Ni-P), nickel-cobalt-phosphide (Ni-Co-P), iridium oxide (IrOx), ruthenium oxide (RuOx), palladium (Pd), and platinum (Pt), wherein the coating layer includes about 0.01-10.0 wt.% of the one or more compounds.
